**Europäisches Patentamt**

(19) **European Patent Office**

**Office européen des brevets**

(11) Publication number: **0 064 873**

**A2**

(12) # EUROPEAN PATENT APPLICATION

(21) Application number: **82302350.2**

(22) Date of filing: **07.05.82**

(51) Int. Cl.³: **F 25 D 29/00**
**G 05 D 23/24**

(30) Priority: **07.05.81 GB 8113927**

(43) Date of publication of application:
**17.11.82 Bulletin 82/46**

(84) Designated Contracting States:
**BE DE FR GB IT NL SE**

(71) Applicant: **R D Technology Limited**
**43d Milton Trading Estate**
**Abington Oxfordshire OX14 4RU(GB)**

(72) Inventor: **Smith, Alan Naylor**
**38 Mansfield Crescent East Hampstead**
**Bracknell Berkshire(GB)**

(74) Representative: **Griffin, Kenneth David**
**Saunders & Dolleymore 2 Norfolk Road**
**Rickmansworth Hertfordshire WD3 1JH(GB)**

(54) Refrigeration system monitoring and warning apparatus.

(57) In a monitoring apparatus for a refrigeration system in which a food store (5) is cooled by a refrigeration plant supplying a cooler (6), a temperature monitoring means (9; 50A, 64A, 66, 70, 72) provides output signals whenever the temperature in said store exceeds a preset value, such signals being passed via a signal delay means (78) to a temperature-fault indicator (84), so that the latter becomes energised only if a said output signal persists for at least a predetermined period. A by-pass circuit (166, 168, 164) enables any such output signal existing when said apparatus is first energised to by-pass said signal delay means (78). A temperature probe fault-detecting circuit (64A, 66, 70, 105, 104; 60A, 62) is arranged likewise to cause energisation of said temperature-fault indicator (84) and of a probe-fault indicator (100) on the occurrence of a probe fault. Refrigeration plant failure signals (at 129) cause energisation of a plant-failure indicator (140), and defrost signals (at 108) inhibit energisation of the temperature-fault indicator (84), and of the probe-fault indicator (100). A common visual alarm (186) responds to first alarm signals derived through a first circuit (178, 180, 184) connected to receive fault signals energising said temperature-fault and plant-failure indicators (84, 140), whilst a common audible alarm (208) responds to second alarm signals derived through a second circuit (188-194, 198, 206) connected to be energised by said fault signals through differentiating circuits (92-96; 154-158). Said second alarm signals are used to modulate (via 200-204) the energisation of said common visual alarm (186), and are terminated in response to the detection of the rear edges of the said fault signals (via 220, 222, 218, 216), or by means of a manually-controlled resetting circuit (210).

./...

FIG.3

FIG.4

## REFRIGERATION SYSTEM MONITORING AND WARNING APPARATUS

This invention relates generally to the monitoring of refrigeration plant, and more particularly to the monitoring of refrigeration plant as used in or in conjunction with food storage cabinets in which frozen [*rooms, and food storage*] or chilled food is displayed for sale in shops and supermarkets.

Such refrigeration plant is normally provided with monitoring and warning devices for giving warning of an undue rise in temperature in the associated food storage room or compartment, and/or any failure in the refrigeration plant, which failure would in the course of time result in a loss or reduction of the refrigeration power of the plant, and a consequent spoiling of stored food.

Certain difficulties have arisen in prior art monitoring/alarm systems in that certain potentially damaging operating conditions which have been correctly detected and noted have given rise to warnings even though the circumstances giving rise to those operating conditions were not such as to warrant [*truly*] the giving of such warnings. Hence 'false' warnings have been given and unnecessary effort has been incurred in responding to those false warnings. The present invention is directed at overcoming those difficulties, so that real and genuine fault conditions are properly differentiated over non -fault conditions, whereby to provide warnings only under real and damaging fault conditions.

-2-

According to various aspects of the present invention, in a monitoring/warning system for use with refrigeration plant as referred to above, the following features are provided:-

(a)  a persistent over-temperature warning means for indicating that an over-temperature detected in a food storage room or compartment has occurred and persisted for a predetermined time delay, whereby to prevent warning being given when a transient rise in temperature (i.e. a non-fault condition) occurs as a result of the loss of cool air from the storage room or compartment e.g. through · draughts or a sustained or frequently repeated opening of the door or doors of the storage room or compartment;

(b)  a temperature probe fault detector for providing automatic warning that a probe of the resistance type (e.g. a thermistor) has become short-circuited, or suffered an open circuit, since in either condition such a probe will not function to give a correct indication of temperature, so that warnings may be given falsely on the occurrence of a short circuit, or not given at all when they should be on the occurrence of an open circuit;

(c)  a defrost responsive means for automatically inhibiting the giving of fault warnings in response to an over-temperature or a probe fault occurring during a defrost cycle;

(d)     a defrost inhibit means for automatically
        inhibiting the commencement of a defrost cycle
        whilst an over-temperature or a probe fault
        persists;

(e)     an earth fault detector for providing automatic
        warning that an earth fault has developed on the
        monitoring/warning equipment;

(f)     a main or overall monitoring/warning means for
        use in conjunction with a plurality of monitoring/alarm units each of which is capable of
        giving warning signals indicative of real and
        genuine fault conditions in an associated
        refrigeration plant, which overall monitoring/
        warning means provides one kind of warning (e.g.
        a flashing light, or a tone) when a fault
        condition first commences in any one of the
        monitoring units, which overall monitoring/
        warning means gives a second kind of warning
        (e.g. a steady light or a discontinued tone)
        when an operator's acknowledgement of the fault
        is given (e.g. by pressing a push button), which
        second kind of warning persists so long as the
        fault condition persists, and which overall
        monitoring/warning means reverts to the first
        kind of warning when a new and second real fault
        condition commences in any one of said monitoring units during the continuance of the first such fault condition; and

(g)     a resetting means for each said monitoring unit which enables that unit to be reset by an operator's acknowledgement of the fault condition (e.g. by pressing a push button) if that fault no longer persists, but which enables warning of any still persisting fault to be given instantaneously after the giving of such operator's acknowledgement and without waiting for the expiry of any time delay to which such warning is normally subjected on a first occurrence of a new such fault.

One monitoring/warning system according to the present invention, for a group of associated, refrigerated, food storage cabinets in which food is displayed for sale, will now be described by way of example and with reference to the accompanying diagrammatic drawings, in which:-

Figure 1 shows diagrammatically a vertical transverse section through one such food storage cabinet;

Figure 2 shows schematically the overall electrical circuit arrangement of the said system, in which system a plurality of individual monitoring/alarm units (one for each said storage cabinet) is shown connected through a system of bus wires to a main monitoring/warning unit;

Figure 3 shows schematically the electrical circuit arrangement of one such individual monitoring/warning unit; and

Figure 4 shows schematically the electrical circuit arrangement of the said main monitoring/warning unit.

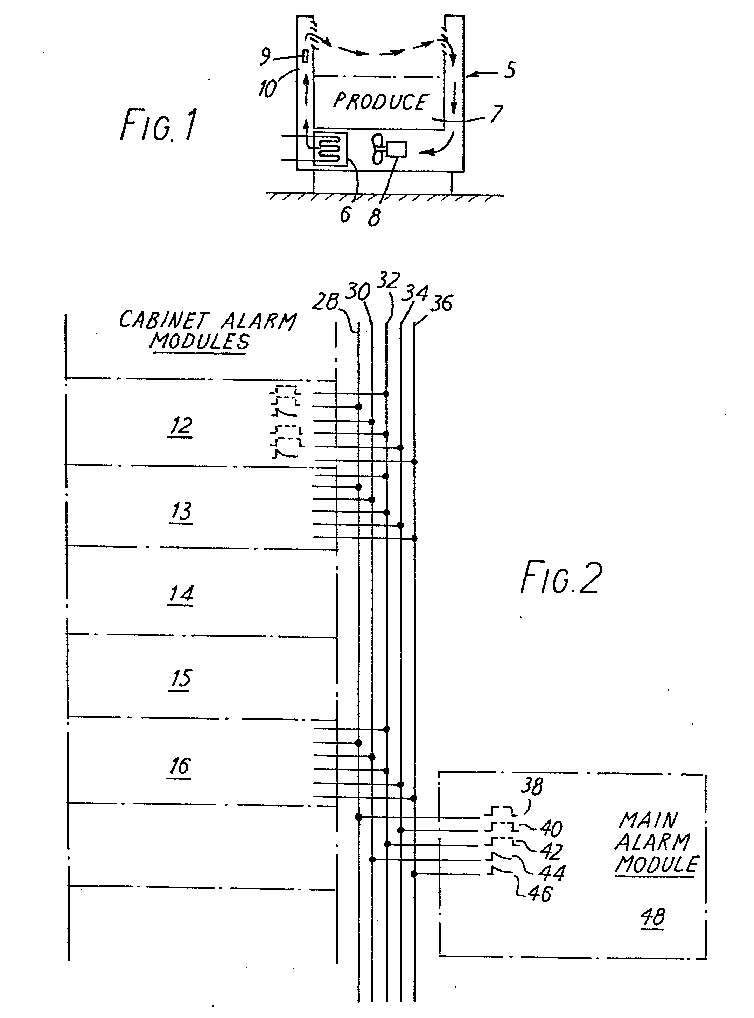

Referring now to Figure 1 of the drawings, each of the said food cabinets 5 has its own evaporator coil 6 arranged to receive refrigerant from a common, remote refrigeration plant (not shown). Cooled air from the evaporator coil is circulated around the food storage compartment 7 of the cabinet, in the direction shown, by a fan 8. That compartment is open-topped, and is sub-divided longitudinally into a plurality of separate food sections. Temperature probes 9 are mounted in respective cool-air passageways 10 leading to the respective food sections, so as to sense the respective inlet-air temperatures of the cool air streams passing into the respective food sections. The said refrigeration plant has an alarm circuit for monitoring the operation of that plant, which alarm circuit includes a plant-failure relay having normally-open contacts that close whenever the refrigeration plant is not operating correctly.

Referring now to Figure 2, associated with the various storage cabinets are respective cabinet monitoring/warning units typically 12, 13, 14, 15, 16, each having six outlet leads 18 - 26 connected as shown to five bus wires 28 - 36.

The respective bus wires are connected to five input connections 38 - 46 of a system or main monitoring/ warning unit 48.

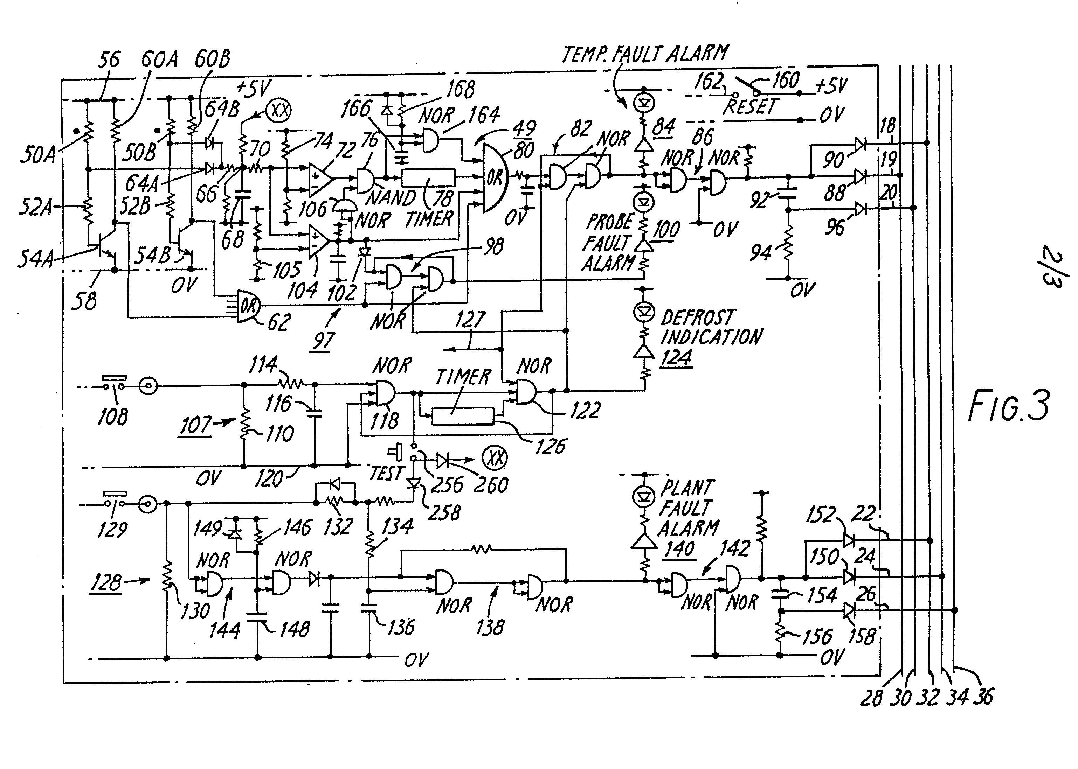

Referring now to Figure 3, there is shown there the schematic circuit arrangement of each one of the cabinet monitoring/warning units 12 - 16. Each such unit includes various fault detecting and alarm circuits which will now be described.

An over-temperature and/or false temperature detecting circuit 49 includes the said temperature probes constitutued by thermistors 50A, 50B, 50C, etc. connected in series with fixed resistors 52A, 52B, 52C, etc. and the base-emitter paths of transistors 54A, 54B, 54C, etc. between +5 and 0 voltage supply lines 56 and 58. The collectors of said transistors have load resistors 60A, 60B, 60C, etc., and are connected to the inputs of an OR gate 62.

The junction of each thermistor 50 and its associated series resistor 52 is connected thro' a diode 64, a resistor-capacitor arrangement 66, 68, 70 to the NI (non-inverting) input terminal (designated '+') of an amplifier 72 of which the I (inverting) input terminal (designated '-') is connected to a reference potential tapping of a potential divider 74. The output terminal of the amplifier is connected to one input of a NAND gate 76, the output of which is connected to the input of a timer/counter 78. The output of the timer is connected to one input of an OR gate 80, of which the output is connected to a latching circuit 82 comprising two NOR gates connected in the manner shown. The output of the latching circuit is connected to supply an 'over-temperature' alarm LED circuit 84, and a double NOR gate circuit 86 connected in the manner shown, and the output of that circuit 86 is connected thro' a diode 88 to the bus wire 28, and through a diode 90 to the bus wire 32, and also to a differentiating circuit 92, 94. The junction of the capacitor 92 and resistor 94 is connected through a diode 96 to the bus wire 30.

The operation of the circuit so far described is as follows. The tapping of reference potential divider 74 is set to a reference potential corresponding to the inlet air temperature at which an 'over-temperature' warning or alarm should be given. Thus, when the temperature signal applied at the NI input of the amplifier 72 by any one of the thermistors 50 rises above said reference potential, the amplifier provides a 'high' output. The NAND gate 76 then having two high inputs (the other input being held 'high' except when an open circuit occurs in a thermistor 50) provides a 'low' output to the timer 78. After a preset time interval (long enough to allow the sensed inlet air temperature to fall to its normal operating range following a non-persistent, short-duration temperature rise), the output of the timer rises and thereupon passes an over-temperature warning signal via
the OR gate 80 to the latching circuit 82, which in
response thereto provides an output (a) to latch itself
in, (b) to energize and illuminate the over-temperature
warning LED and (c) to supply a steady 'high' signal to
bus wires 28 and 32, and a differentiated output signal
to bus wire 30.

Should the over-temperature signal supplied by
the amplifier 72 disappear (because of a return to the
normal operating temperature range in the relevant storage
compartment section) before the preset count of the timer
is completed, no output signal is delivered by the timer
to the OR gate 80 and latching relay 82.

This enables persistent conditions of over-
temperature due to a fault in the system to be differentiated from transient over-temperature conditions which
arise, for example, because of a transient disturbance
of the normal air flow pattern in the storage sections
due to external influences (e.g. draughts).

A temperature probe fault detecting circuit 97
includes said OR gate 62, which gate has its output
connected (a) to a further input of the OR gate 80, and
(b) to one input of a latching circuit 98, constituted by
a double NOR gate arrangement as shown. The output of
that latching circuit is connected to a 'probe fault'
alarm. LED circuit 100. A second input of latching
circuit 98 is connected thro' a diode 102 to the output of
an amplifier 104, which amplifier has its NI input connected to the NI input of the amplifier 72. The I input of amplifier 104 is connected to a source of reference potential 105, and the output of that amplifier 104 is connected to supply a further input of the OR gate 80.

The probe fault detecting circuit operates in the following manner to energize the 'probe fault' LED circuit 100.

In the event of any one of the thermistors 50 becoming open-circuited, the associated transistor 54 ceases to conduct, so that its collector rises to the high level and provides a high input signal to OR gate 62, which in turn provides a similar input signal to the OR gate 80, to provide without any delay the same consequences (as described above) as a sustained over-temperature condition. The OR gate 62 also supplies its output signal to the first input of the latching circuit 98, which causes energization of the 'probe fault' LED circuit 100.

In the event of any one of the thermistors 50 becoming short-circuited, that thermistor has a substantially zero drop developed across it so that a 'high' signal voltage is supplied thro' the associated diode 64 to the input of the amplifier 104. As a consequence that amplifier supplies a high output signal to the OR gate 80 (with the same undelayed consequences referred to above) and to the second input of the latching circuit 98, with the immediate consequence that a high output signal
is supplied instantly to the 'probe fault' LED circuit 100.

Thus in the event of an open or a short circuit
in any one of the temperature probes, the probe fault
alarm LED 100 and the over-temperature alarm LED 84 are
both illuminated.

When a short circuit probe fault is detected
a NOR gate 106 having both inputs supplied by the short-
circuit detecting amplifier 104 provides a 'low' signal
to the associated input of the NAND gate 76 (in the over-
temperature circuit path) so as to inhibit the passage of
any subseqently generated over-temperature signals to the
timer 78.

A defrost responsive circuit 107 includes a
pair of normally open contacts 108 which are closed by a
relay (not shown) in a refrigeration unit control
apparatus (not shown) when a defrost cycle is initiated
by said apparatus. Those contacts 108 are connected so
as to energize a resistor 110, and a parallel resistor-
capacitor circuit 114, 116. The voltage at the junction
of the capacitor 116 with resistor 114 is applied to a
first input of a NOR gate 118, a second input of that gate
being connected to the zero voltage line 120.

The output of NOR gate 118 is connected to a
second NOR gate 122 which, in the manner of a latching
circuit has its output connected to a third input of
gate 118. The output of gate 122 is also supplied to a 'defrost indicating' LED circuit 124 to give indication that a defrost cycle is in operation, and to an inhibit input of the second of the two NOR gates constituting the temperature alarm latching circuit 82, so as to inhibit the giving of an over-temperature alarm during a defrost cycle.

A timer 126 is connected between the output of gate 118 and a second input of gate 122 to provide a signal for terminating the illumination of the defrost indicating LED 124 after a predetermined time interval which is set to allow the temperature in the food storage cabinet to fall to its normal operating range again after the completion of a defrost period. This also terminates the defrost-initiated time interval during which the temperature alarm LED 84 cannot be illuminated by an over-temperature alarm signal provided by a temperature probe 50.

The output of NOR gate 122 is also supplied to an inhibit input of the second of the two NOR gates constituting the probe fault alarm latching circuit 98, so as to prevent the illumination of the probe fault LED 100 during the said defrost-initiated time interval.

A third input of NOR gate 122 is connected to receive an inhibit signal from the latching input of the first of the two NOR gates constituting said latching circuit 82. That inhibit signal is also applied elsewhere via lead 127 to inhibit the starting of a defrost cycle. The presence of that inhibit signal at the third input of NOR gate 122 acts to inhibit the energization of the defrost indicating LED 124.

A 'plant failure' alarm circuit 128 includes a said pair of normally-open relay contacts 129 which are closed by the said plant failure relay when the refrigeration plant of the associated storage cabinet has suffered a failure which is likely to impair its ability to maintain the necessary cooling action on the air being circulated through the food storage cabinet. Those contacts are connected so as to energize a resistor 130, and a parallel circuit which includes in series a parallel diode-resistor combination 132, a resistor 134, and a capacitor 136. The junction of resistor 134 and capacitor 136 is connected to a first input of a latching circuit 138 comprising two NOR gates connected as shown, and the output of that latching circuit is connected to a 'plant failure' alarm LED circuit 140, and to the input of a double NOR gate circuit 142 connected as shown.

A further double NOR gate 144 connected as shown has its input connected to the junction of resistor 130 and contacts 129, and the output of the first of the two constituent NOR gates connected to the first input of the second of those two NOR gates. The second input of said second NOR gate is connected to the junction of a resistor-capacitor circuit 146, 148 so as to be influenced by the voltage across the capacitor. The resistor 146 is provided with a parallel connected diode.

The output of the double NOR gate 142 is connected through diodes 150, 152 to the bus wires 34 and 32 respectively, and through a differentiating circuit 154, 156 and a diode 158 to the bus wire 36.

In operation, with the refrigeration plant healthy the contacts 129 are open, the two inputs of the latching circuit 138 are both low and the output of that circuit is low, so that the plant failure alarm LED 140 is not illuminated, and no signals are supplied to the bus wires.

In the event of a plant failure, the contacts 129 close, a 'high' signal is applied to the first input of the latching circuit 138 so that that circuit supplies a high output to cause the plant failure alarm LED 140 to be illuminated, and to supply appropriate steady and pulse signals to the bus wires 32 and 36.

After the occurrence of any of the above-mentioned sorts of fault, the circuitry of Figure 3 may be reset by momentarily operating a reset switch whereby to momentarily open reset contacts 160 connected in the positive voltage supply line 162 through which the logic circuits 49, 97, 107 and 128 of Figure 3 are supplied.

If by the time that those reset switch contacts 160 reclose, any fault or other condition previously detected and indicated by illumination of the appropriate LED has cleared, that condition will not be indicated again (by illumination of the relevant LED) on reclosure of the switch contacts 160.

However, if for example a plant failure persists so that contacts 129 are still closed on reclosure of the reset switch contacts 160 the double NOR gate 144 passes the fault signal instantly to one input of the latching circuit 138, so that the plant failure alarm LED is immediately energized, and renewed fault signals are passed to the bus wires.

Likewise, if on reclosure of the reset switch contacts 160 a probe fault still persists, the probe fault alarm LED circuit 100 is promptly re-energized, and renewed signals sent to the bus wires through the NOR gate circuit 86.

Moreover, if on the closure of the reset switch contacts 160, an over-temperature alarm condition still persists, the alarm signal from the NAND gate 76 bypasses the timer 78 via a NOR gate 164, which has a second input controlled by the voltage appearing across a capacitor 166 in a resistor-diode-capacitor circuit 166, 168. This NOR gate is arranged to be effective to pass that signal for a short while just after switch-on by closure of the contacts 160, so that the transmission of a persistent over-temperature fault signal is not delayed by the timer 78 in those circumstances.

In a similar manner any fault condition which is existing at the time of first energizing the circuitry of Figure 3 after a shutdown, by closing the contacts 160 so as to energize the positive supply line 162 will automatically be indicated by an instant illumination of the relevant alarm LED 84, 100 or 140.

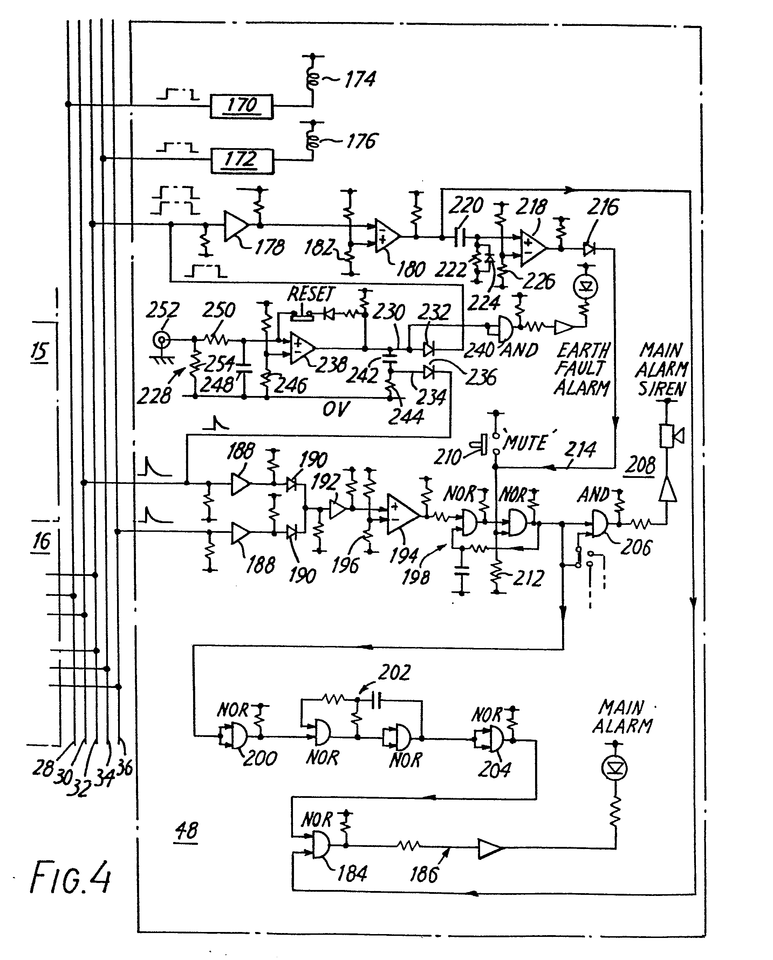

Referring now to the Figure 4, the bus wires 28 and 34 at which appear alarm signals from the over-temperature and plant failure alarm circuits respectively are connected respectively through dial-out amplifier circuits 170 and 172 to dial-out relays 174, 176 whereby the occurrence of a fault signal on the bus wires 28 and 34 is notified automatically by telephonic means controlled by said relays to a remote control point, which function is useful when the refrigeration plant is not attended during non-working hours..

The bus wire 32, at which appear/alarm signals
                                      steady

from both the over-temperature and probe fault alarm circuits, is connected through a buffer amplifier 178 to the I input of an amplifier 180 of which the NI input is

supplied with a preset reference potential by a potential divider 182. The output of that amplifier is connected (at the bottom of the diagram) to a first input of a NOR gate 184,and the output of that gate is supplied to a main alarm LED circuit 186. This latter circuit is energized when the inputs to the NOR gate 184 both have low value. The first input, provided by amplifier 180, will be of low value whenever an alarm signal is present on the bus wire 32, so that a second input supplied to the NOR gate 184 will determine when the main alarm LED circuit is energized during the period of a fault. That second input is derived from the two bus wires 30 and 36 through a common circuit which will now be described.

The two bus wires 30, 36 are connected through respective buffer amplifiers 188 and diodes 190 and a common buffer amplifier 192 to the NI input of an amplifier 194 of which the I input is connected to receive a preset reference potential from a potential divider 196. The output of that amplifier is connected to an input of a latching circuit 198 comprising two NOR gates connected as shown. The output of that latching circuit is connected to a NOR gate 200, an oscillator 202 comprising two NOR gates connected as shown, and a further NOR gate 204 to the aforementioned second input of the NOR gate 184, whereby to provide a signal for controlling the flashing of the main alarm LED 186.

The output of the latching circuit 198 is also connected through an AND gate 206 to a main alarm siren circuit 208.

The second stage NOR gate of that latching circuit 198 has a second input connected with a resetting circuit which comprises a normally-open reset pushbutton switch ('MUTE') 210 connected in series with a resistor 212, closure of that switch 210 being effective to unlatch the circuit and allow its output to fall to a low value.

Connected to the junction of that reset switch 210 and the resistor 212 is a further resetting circuit 214 for unlatching that latching circuit 198, which resetting circuit 214 derives its signals via a diode 216 from the output of an amplifier 218. The latter has its NI input connected to the junction of a capacitor 220 and a resistor 222 which together form a series circuit supplied by the output of the amplifier 180. The resistor 222 has a parallel connected diode 224, and the I input of the amplifier 218 is supplied with the reference potential by a potential divider 226.

The part of the unit 48 so far described operates in the following manner:-

The detection of a temperature or plant fault by any one of the monitoring units 12 - 16 results in the application of (a) a steady fault signal to the bus wire 32, and to the bus wire 28 (over-temperature fault) or bus wire 34 (plant fault), and (b) a transient fault signal on the initiation of the fault to the bus wire 30 (over-temperature fault) or the bus wire 36 (plant fault).

As a result, the appropriate dial-out circuit 170, 172 is energized from the appropriate bus wire 28 or 30 to give remote warning of the fault by telephone, and the signal applied to the bus wire 32 causes the steady signal amplifier 180 to provide a low signal at the associated input of the NOR gate 184, which in the presence of a low signal at its other input provides  an output to energize the main alarm LED, thus giving local visual warning of the fault.

The transient fault signal developed at bus wire 30 or 36 causes the latching relay 198 to supply a high signal to the NOR gate 200, with the result that the oscillator 202 is stimulated, and provides a pulsed signal through the NOR gate 204 to the second input of the NOR gate 184, which signal modulates the output of that NOR gate, thus modulating the energization of the main alarm LED 186.

Simultaneously, the high output of the latching circuit 198 applied to the AND gate 206 stimulates and energizes the siren circuit 208, so that a continuous audible warning is given.

Should the detected fault be cleared without operator acknowledgement or intervention, the rear flank of the steady fault signal developed by the amplifier 180 develops a trigger signal at the NI input of amplifier 218, which thereupon supplies via resetting circuit 214 a resetting signal (i.e. muting) to the second NOR gate of the latching circuit 198, which gate thereupon unlatches and terminates the energization of the siren circuit 208, and of the oscillator 202, thus causing a high input to appear at the other input of the NOR gate 184. A further high input signal also appears at the lower input of that NOR gate 184 due to the termination of the steady fault signal applied to the amplifier 180. As a result the output of the NOR gate 184 falls, and the main alarm LED circuit is de-energized.

If on the other hand, an operator presses the MUTE pushbutton 210 whilst the fault still persists, the latching relay is caused to unlatch in the manner just described above, so that the siren circuit is de-energized and the siren thereby silenced, and the oscillator is caused to cease oscillation and provide a low signal to the upper input of the NOR gate 184.

However, the continuation of the fault condition results in the continuation of the low signal applied to the lower input of the NOR gate 184 by the amplifier 180, so that in the presence of the two low input signals to the NOR gate 184 the energization of the main alarm LED circuit 186 continues, thus continuing the visual warning of the fault.

If then, in the presence of an operator-acknowledged fault signal, a second fault condition develops, with the result that steady and transient fault signals are again applied to the bus wires, the new steady signal effects no change in the condition of the unit 48, though the new transient fault signal (appearing at bus wire 30 or 36) causes the latching circuit 198 to operate and become latched, so that the siren circuit is again energized and sounds the siren, and the oscillator 202 is again energized and causes the signal applied to the upper input of NOR gate 184 to alternate between high and low values, so that the main alarm LED circuit

-20-

is intermittently energized again, thus causing the main alarm LED to flash.

Subsequent operation of the operator's MUTE pushbutton 210 causes the siren circuit to be de-energized and the siren thereby muted, and the main alarm LED circuit 186 to be energized continuously whereby to maintain the main alarm LED continuously illuminated.

The main alarm unit 48 also includes an earth fault detector circuit 228 which has a steady fault signal output circuit 230 connected through a diode 232 to the input circuit connecting the steady fault signal bus wire 32 to the buffer amplifier 178, and a transient fault signal output circuit 234 connected through a diode 236 to the input circuit connecting the transient fault signal bus wire 30 to its buffer amplifier 188.

The earth fault detector includes an amplifier 238 having its output connected directly to said diode 232, to an earth fault alarm LED circuit 240, and through a series capacitor-resistor circuit 242, 244 to said diode 236. The amplifier 238 has its I terminal connected to receive a reference potential from a potential divider 246, and its NI input connected to receive the voltage developed across a capacitor 248 which is connected in series with a resistor 250 between an input terminal 252 and the zero voltage side of the DC supply source.

A resistor 254 is connected in parallel with the series circuit which includes the capacitor 248 and resistor 250, and the input terminal 252 is connected to earth.

In the event of an earth fault developing, for example, on any of the temperature probes 50, the input terminal 252 of the earth fault detector circuit will be raised to a potential above the reference potential supplied to the I input of the amplifier 238, so that that amplifier energizes the earth fault alarm LED circuit 240 to give local visual warning of that fault, and delivers a steady high output to the diode 232 and a transient output to the diode 236. These steady and transient signals applied to the respective amplifiers 178 and 188 have the same effects as similar signals applied thereto by fault signals appearing on the relevant bus wires.

Thus, summarizing the operation of the main monitoring/warning unit 48, the occurrence of any fault such as will energize any one of the LED alarm circuits in any one of the individual monitoring/warning units 12 - 16 for indicating a temperature alarm, a probe fault, or a plant fault, or an earth fault will initially

    (a)   sound the main alarm siren, and

    (b)   cause the main alarm LED to flash.

The siren may be silenced, and the main alarm LED rendered continuously illuminated, by the depression of the MUTE pushbutton 210 by an operator to acknowledge the existence of the fault.

A further fault developed whilst a preceding fault still persists after the operator's acknowledgement of that fault will cause the alarm siren to sound again, and the illumination of the main alarm LED to become intermittent again until that next fault is likewise acknowledged by the operator.

An attempt to reset the units 12 - 16 indicating a fault, by operation of the associated reset switch contacts 160 will result in the de-energization of the appropriate fault LED circuit, and then the re-energization thereof if the relevant fault still persists.

The main alarm LED will remain energized so long as there is a persistent fault present in any one of the individual units 12 - 16, even though it became momentarily de-energized during the attempted resetting of the relevant individual unit.

If after a fault has developed in one unit 12 - 16, so that the siren and main alarm LED have become energized, that fault clears itself, or is otherwise cleared, the removal of the steady fault signal (or all such signals) at the bus wire 32 will cause (a) generation of a terminating signal by the amplifier 218 which on transmission through diode 216 to the second NOR gate in the latching circuit 198 will cause the upper input of the NOR gate 184 to receive a low signal, and (b) the transmission of a high signal to the lower input of the NOR gate 184, so that a low signal is supplied to the main alarm LED circuit. Thus the siren if operative is silenced, and the main alarm LED is extinguished.

In the circuit diagrams described above various components are shown even though they have not been specifically referred to in the description. Those components are shown in conventional form and are connected, like the respective logic circuits, for supply at the respective upper and lower extremities to the +5 and 0 voltage sides of the DC supply source.

Each individual unit 12 - 16 includes a test pushbutton 256 (Figure 3) for proving the LED circuits 84, 100 and 140. Depression of that button applies the output of the NOR gate 118 (in the defrost circuit 107) through diodes 258, 260 to the junction of resistors 66, 70 (via a connection 'xx' not shown) in the over-temperature circuit 49, and to the junction of resistors 132, 134 in the plant failure circuit 128.

The various features referred to above may be used in conjunction with one another as described above, or some only of such features may be used together in different combinations as appropriate and as required.

CLAIMS                          -1-

1.        A monitoring and warning apparatus arranged for monitoring the operation of a refrigeration system in which a food storage and/or display cabinet (5) or room is cooled by a refrigeration plant (6+...), in which apparatus a mal-operation warning means (84,140) is responsive to output signals provided by at least (a) a temperature monitoring means (9; 50A,50B...) arranged to monitor the temperature at a predetermined position in said cabinet (5) or room and provide an output signal whenever that temperature exceeds a preset value, and (b) a refrigeration plant monitoring means arranged to monitor the operating condition of that plant (6+...) and provide an output signal (at 129) indicative of a plant failure condition whenever that plant can no longer effectively cool said cabinet (5) or room, characterised in that the output signals of the said temperature monitoring means (9; 50A,50B...) are passed to a temperature-fault warning element (84) of said warning means via a signal delay means (78) which is effective to prevent said output signals reaching said element (78) unless they persist for a time period of which the duration exceeds a predetermined value.

2.        Apparatus according to Claim 1, wherein said temperature monitoring means (9; 50A,50B...) requires for the generation of its said output signals electrical

-2-

energisation from a supply source (+5V), wherein switching means (160) for energisating said apparatus from a supply source (+5V) so as to render it operative are arranged to connect said temperature monitoring means (9; 50A,50B...) with said source (+5V), and wherein there is provided a by-pass circuit (164,166,168) for enabling output signals of said temperature monitoring means (9; 50A,50B...) to by-pass said signal delay means (78) and pass directly to said temperature fault warning element (84) during a predetermined short period following operation of said switching means (160) to energise said temperature monitoring means (9; 50A,50B...), so that a temperature fault signal existing at the time of energising said apparatus passes directly and without delay to said temperature-fault warning element (84).

3.      Apparatus according to Claim 1 or Claim 2, wherein said temperature monitoring means (9; 50A,50B...)

includes one or more temperature detecting probes

(50A,50B...) of the electrical resistance type, wherein said apparatus also includes a probe-fault detecting means (64A,66,70,104; 60A,62) for producing output signals whenever a short-circuit fault, or an open- circuit fault, develops in any one such probe (50A,50B...),

and wherein said temperature-fault warning element (84) is also responsive to said output signals of said probe-fault detecting means (64A,66,70,104; 60A,62), so as to give warning that the temperature indication of at least one of
said temperature detecting probes (50A,50B...) is either
excessive or otherwise faulty.

4.      Apparatus according to Claim 3,
including a latching circuit (98) for receiving from said
probe-fault detecting means (64A,66,70,104; 60A,62) said
probe-fault output signals, and for supplying in response
to any such output signal a sustained probe-fault output
signal,
and wherein said mal-operation warning means includes a
probe-fault warning element (100) whose energisation is
controlled in accordance with said sustained probe-fault
output signals.

5.      Apparatus according to Claim 4,
including an OR gating circuit (80) having its inputs
connected to receive output signals from said signal delay
circuit (78), said by-pass circuit (164,166,168), and said
probe-fault detecting means (64A,66,70,104; 60A,62)
respectively, and its output circuit connected to a
temperature-fault latching circuit (82) for supplying in
response to the delivery of a fault signal to any one of
the input circuits of the said OR gating circuit (80) a
sustained temperature-fault output signal for controlling
the energisation of said temperature-fault warning element
(84).

6.      Apparatus according to Claim 5,
wherein said mal-operation warning means also includes a

-4-

defrost-warning element (124), and a latching circuit (118,122,126) (hereafter called the 'defrost latching circuit') for receiving from said refrigeration plant 'defrost' signals (at 108) indicative that a defrost cycle is in progress therein, and for supplying in response to each such defrost signal a sustained defrost output signal for controlling the energisation of said defrost warning element (124), and wherein said sustained defrost output signal is applied to means (82) controlling the energisation of said temperature-fault warning element (84) so as to inhibit energisation of that warning element (84) in response to subsequently-occurring temperature-fault signals.

7.        Apparatus according to Claim 6, wherein each said sustained defrost output signal is also applied to means (98) controlling the energisation of said probe-fault warning element (100), so as to inhibit operation of that warning element (100) in response to subsequently-occurring probe-fault output signals.

8.        Apparatus according to Claim 7, wherein said mal-operation warning means includes a 'plant-failure' warning element (140), and wherein there is provided a latching circuit (138) (hereinafter called the 'plant-failure latching circuit') for receiving said output signals (at 129) from said plant monitoring means and for supplying in response to each such plant-failure signal a sustained plant-failure output signal for controlling the energisation of said plant-failure warning element (140).

9.       Apparatus according to Claim 8, including a common visual fault-warning means (186) and a control means for controlling the energisation of that common visual warning means (186), said control means including a differential amplifier (180) (hereafter called the 'first differential amplifier') connected to receive said sustained temperature-fault output signals and said sustained plant-failure output signals and to supply to one input of a signal gating means (184) an output signal whenever any one of said signals received by said differential amplifier (180) exceeds a predetermined value, whereby to cause energisation of said common visual warning means (186) to be effected, said apparatus also including a common audible fault-warning means (208) and a control means for controlling the energisation of that common audible warning means (208), which control means includes a second differential amplifier (194) connected to receive differentiated fault signals derived via differentiating circuits (92,94,96; 154,156,158) from the front edges of said sustained output signals supplied by said temperature-fault latching circuit (82) and said plant-failure latching circuit (138) respectively, and to supply in response to such differentiated fault signals an output signal whenever a said differentiated signal exceeds a predetermined value, and a latching circuit (198) connected to receive said
output signals from said second differential amplifier
(194) and to supply in response to each said output signal
a sustained output signal for controlling the energisation
of said common audible fault-warning means (208),
and said apparatus also including modulating means
(200,202,204) responsive to the last-mentioned sustained
output signal and connected to supply in response to such
signal a modulating signal to a second input circuit of
said signal gating means (184) whereby to modulate the
energisation of said common visual fault-warning means
(186), and a resetting means connected to supply a
resetting signal to the last-mentioned latching circuit
(198) whereby to terminate energisation of said common
audible fault-warning means (208) and modulation of said
energisation of said visual fault-warning means (186),
said resetting means including a rear-edge detecting
circuit (220,222,218,216) connected to the output of said
first differential amplifier (180) for automatically a
said resetting signal on termination of a sustained output
signal provided by that amplifier (180), and a manually-
operable resetting means (210) connected to supply an
alternative said resetting signal on operation of that
means (210) by an operator.

10.     A monitoring and warning equipment for
monitoring the operation of a plurality of different
refrigeration systems (12-16) in each of which a food storage and/or display cabinet (5) or room is cooled by an individual refrigeration plant (6+...),

which equipment comprises a plurality of individual apparatuses each according to Claim 8, there being one such apparatus for each said refrigeration system (12-16), a common visual fault-warning means (186), and a control means for controlling the energisation of that common visual warning means, said control means including a differential amplifier (180) (hereafter called the 'first differential amplifier') connected to receive said sustained temperature-fault output signals and said sustained plant-failure output signals from each such apparatus and to supply to one input of a signal gating means (184) an output signal whenever any one of said signals received by said differential amplifier (180) exceeds a predetermined value, whereby to cause energisation of said common visual warning means (186) to be effected, said equipment also including a common audible fault-warning means (208) and a control means for controlling the energisation of that common audible warning means, which control means includes a second differential amplifier (194) connected to receive differentiated fault signals derived via differentiating circuits (92,94,96; 154,156,158) from the front edges of the respective sustained output signals supplied by the respective temperature-fault latching circuits (82) and the respective plant-failure latching circuits (138) of the respective said apparatuses (12-16), and to supply in response to such differentiated fault signals an output signal whenever any one of said differentiated signals exceeds a predetermined value, and a latching circuit (198) connected to receive said output signals from said second differential amplifier (194) and to supply in response to each said output signal a sustained output signal for controlling the energisation of said common audible fault-warning means (208), and said equipment also including modulating means (200,202,204) responsive to the last-mentioned sustained output signal and connected to supply in response to such a signal a modulating signal to a second input circuit of said gating means (184) whereby to modulate the energisation of said common visual fault-warning means (186), and a resetting means connected to supply a resetting signal to the last-mentioned latching circuit (198) whereby to terminate energisation of said common audible fault-warning means (208) and modulation of said energisation of said visual fault-warning means (186), said resetting means including a rear-edge detecting circuit (220,222,218,216) connected to the output of said first differential amplifier (180) for providing automatically a said resetting signal on termination of a sustained output signal provided by that amplifier (180), and a manually-operable resetting means (210) connected to supply an alternative said resetting signal on operation of that means (210) by an operator.

1/3

FIG.1

CABINET ALARM MODULES

28 30 32 34 36

12

13

14

15

16

FIG.2

38
40
42
44
46

MAIN
ALARM
MODULE

48

FIG.3

0064873

Fig.4

0064873

3/3